# EUROPÄISCHE PATENTSCHRIFT

(11) **EP 3 533 600 B1**
(45) Veröffentlichungstag und Bekanntmachung des Hinweises auf die Patenterteilung: **21.09.2022**
(21) Anmeldenummer: 18159405.2
(22) Anmeldetag: 01.03.2018
(51) Int. Cl.: B32B 5/02, B32B 5/18, B32B 5/24, B32B 7/02, B32B 7/08, B32B 27/06, B32B 27/12, B32B 27/30, B32B 27/32, B60R 21/00

(54) **VERBUNDSTRUKTUR FÜR AIRBAGABDECKUNG UND NÄHPRODUKT DER VERBUNDSTRUKTUR**
COMPOSITE STRUCTURE FOR AN AIRBAG COVER AND SEWN PRODUCT WITH THE COMPOSITE STRUCTURE
STRUCTURE COMPOSITE POUR VOLET DE RECOUVREMENT DE COUSSIN GONFLABLE DE SÉCURITÉ ET ARTICLE DE COUTURE DE LA STRUCTURE COMPOSITE

(43) Veröffentlichungstag der Anmeldung: 04.09.2019
(73) Patentinhaber: Bayerische Motoren Werke Aktiengesellschaft, 80809 München (DE); TMG - Tecidos Plastificados e Outros Revestimentos Para a Indústria Automóvel, SA, 4770-583 Säo Cosme Vale (PT)
(72) Erfinder: de Pinho, Elizabete, 4050-300 Porto (PT); Silva, Luis Filipe, 4705-157 Braga (PT); Gonçalves, Valério, 4830-733 Póvoa de Lanhoso (PT); Burk, Julia, 82386 Oberhausen (DE); Marquardt, Tom, 84036 Landshut (DE)
(74) Vertreter: Strehl Schübel-Hopf & Partner

(56) Entgegenhaltungen:
- EP-A1- 1 538 175
- WO-A1-96/25290
- DE-A1- 10 244 311
- DE-A1-102016 206 340
- US-B2- 9 260 577

## Beschreibung

### Gebiet der Erfindung

Die vorliegende Erfindung betrifft eine Verbundstruktur als Überzug für eine Airbagabdeckung, ein Nähprodukt sowie ein Verfahren zur Herstellung der Verbundstruktur und des Nähprodukts.

### Stand der Technik

Airbags sind in Kraftfahrzeugen an verschiedenen Stellen, zum Beispiel in Lenkrädern, Armaturenbrettern, Türen, Sitzen und Dachverkleidungen, integriert. Für eine zuverlässige Funktionsweise des Airbags ist es notwendig, dass der Kunststoffträger in allen seinen Schichten eine bzw. mehrere Materialschwächungen, sog. Sollbruchstellen, aufweist, die den Schusskanal des Airbags definieren. Im Bereich der Abdeckungen eines Airbags ist es üblich, die Abdeckung des Airbags im Bereich der Airbagklappe mit einer sogenannten Aufreißnaht zu versehen, so dass sich diese bei einem Aufprall ungehindert öffnen und der Airbag sich entfalten kann.

Aus optischen Gründen beziehungsweise wegen des Designs fordern jedoch die Kraftfahrzeughersteller zunehmend, dass beispielsweise der Beifahrerairbag, der im Armaturenbrett integriert ist, auf der dem Insassen zugewandten Seite hin unsichtbar gestaltet ist. Dazu wird das Armaturenbrett mit der darin integrierten Airbagklappe mit einem Überzug ohne Aufreißnaht versehen.

Dieser Überzug muss allerdings im Bereich der Airbagklappe eine Materialschwächung aufweisen, so dass ein sicherer Airbagschuss, das heißt die sichere Öffnung der Airbagklappe und die Entfaltung des Airbags bei einem Aufprall, gewährleistet bleibt. Das Öffnen des Überzugs beim Airbagschuss entlang der Materialschwächungen muss zudem innerhalb eines vorgegebenen Zeitfensters erfolgen. Ebenso muss ein unkontrollierter Partikelflug durch umherfliegende Bruchstücke des Überzugs auf jeden Fall vermieden werden.

Alternativ zu Airbagabdeckungsüberzügen mit Materialschwächung können Folienmaterialien eingesetzt werden. Diese Folienmaterialien müssen ein erforderliches Reißverhalten zeigen, wobei innerhalb von definierten Zeitvorgaben die Entfaltung des Airbags stattfinden muss, ein Partikelflug vermieden wird und der Schutz des Fahrgastes gewährleistet ist.

Bei Slush- oder Sprühhäuten wird die hergestellte Haut mit einem Schaum hinterschäumt. Dieser Schaum wird gleichzeitig mit einem stabilen Trägerteil verbunden. Bei diesen Konstruktionen wird bei einer Airbag-Öffnung die Airbagklappe vom Sack gegen den Schaum getrieben, der dabei bricht. Im weiteren Verlauf trifft die Klappe auf die kompakte innere Schicht der zweilagigen Kompaktfolienkonstruktion, die aufgrund ihrer signifikant höheren Festigkeit und Dehnfähigkeit nicht sofort bricht, sondern zuerst verstreckt wird.

Als Überzug für Armaturenbretter werden für Oberklassefahrzeuge PVC- oder PUR-Materialien verwendet. Dabei werden üblicherweise Abstandshalterstoffe (Spacer) als Haptikschicht eingesetzt. In letzter Zeit sind sogenannte "multitear"-Abstandshalterstoffe entwickelt worden, die ohne Materialschwächung für Airbagabdeckungen eingesetzt werden können.Die Verwendung von Schaumfolienlaminaten für Airbagabdeckungen ist in DE 10 2014 213 974 A1 beschrieben. Das dort beschriebe Schaumfolienlaminat umfasst eine kompakte Deckschicht und eine Schaumschicht einer Dichte von mindestens 350 kg/m³ auf der Unterseite der Deckschicht, wobei die Deckschicht eine äußere Schicht und eine innere Schicht aufweist.

DE 102 44 311 A1 offenbart eine Verbundstruktur für eine Airbagabdeckung, die eine Schaumschicht und ein Textil umfasst. US 9 260 577 B2 offenbart eine Verbundstruktur aus Schaum und Textil.

Die Verwendung von Folienlaminaten für Airbagabdeckungen ist auch in DE 10 2016 206 340 A1 beschrieben. Das dort beschriebe Folienlaminat umfasst eine kompakte Deckschicht und eine Schaumschicht einer Dicke im Bereich von 0,5 bis 4 mm und einer Dichte von 40 bis 200 kg/m³ auf der Unterseite der Deckschicht, wobei die Deckschicht zweilagig ausgeführt sein kann.

Ein Nachteil dieser Verbundstrukturen ist die geringe Flexibilität und Weichheit, insbesondere dann, wenn die Dichte der Schaumschicht hoch ist. Andererseits können diese Strukturen eine geringe Dicke aufweisen. Dadurch ergeben sich Nachteile hinsichtlich der Haptik sowie der Handhabung bei der Verarbeitung.

### Durch die Erfindung zu lösende Aufgaben

Der Stand der Technik offenbart keine Verbundstrukturen, die einerseits ohne Materialschwächung gute Eigenschaften als Airbagabdeckungen, insbesondere Reißeigenschaften, aufweisen und andererseits weich und flexibel sind, so dass sie hinsichtlich Haptik und Handhabung bei der Verarbeitung vorteilhaft sind. Insbesondere sollen die Verbundstrukturen gut zu vernähen sein.

Daher ist die Aufgabe der vorliegenden Erfindung die Bereitstellung einer Verbundstruktur und eines Nähprodukts mit einer verbesserten Kombination von Eigenschaften, wie Reißeigenschaften, Haptik, Faltenbildung und Handhabung bei der Verarbeitung, insbesondere beim Vernähen.

### Zusammenfassende Darstellung der Erfindung

Die Aufgabe wurde durch Bereitstellen einer Verbundstruktur und eines Nähprodukts nach den beiliegenden Patentansprüchen gelöst.

Der Gegenstand der vorliegenden Erfindung ist in den beigefügten Patentansprüchen definiert.

### Vorteile der Erfindung

Die erfindungsgemäße Verbundstruktur weist ein Reißverhalten auf, das den Anforderungen bei der Airbagöffnung genügt, ohne dass eine Schwächung der Verbundstruktur bzw. Dekormaterials erfolgen muss. Hierdurch wir zum einen eine sichtbare Schwächungslinie vermieden, welche als Makel im Design bewertet wird.

Der wesentliche Vorteil besteht aber darin, dass die Herstellungskosten gesenkt werden können. Die erfindungsgemäße Verbundstruktur stellt eine kostengünstige Alternative zu den hochpreisigen PVC- oder PUR-Materialien mit Abstandshalterstoffen dar. Insbesondere ermöglicht die Vernähbarkeit der erfindungsgemäßen Verbundstruktur die Verwendung als Alternative zu den genannten Materialien. Dadurch kann die erfindungsgemäße Verbundstruktur auch in Oberklassefahrzeugen eingesetzt werden.

Die erfindungsgemäßen Verbundstrukturen weisen eine geringe Faltenbildung beim Knicken auf. Dadurch sind sie leichter handhabbar und ermöglichen insbesondere ein leichteres Vernähen.

Aufgrund der speziellen Mehrschichtstruktur weisen die erfindungsgemäßen Verbundstrukturen weitere Eigenschaften auf, die beim Vernähen von Vorteil sind. Diese Eigenschaften sind insbesondere die Nahtfestigkeit, also eine hohe Stichausreißkraft, sowie eine hohe Weiterreißfestigkeit.

Aufgrund der geringen Dicke der äußeren kompakten Schicht kann die Materialgrundlage in dieser Schicht so gewählt werden, dass spezifische Anforderungen wie Oberflächenbeständigkeiten, Glanz, Narbdarstellung, Alterungsbeständigkeiten und dergleichen erfüllt werden können.

Ein weiterer Vorteil ist die einfache Recyclebarkeit der erfindungsgemäßen Verbundstruktur, wenn ein Polyolefinschaum und ein thermoplastisches Polyolefin als Deckschicht eingesetzt werden, da diese derselben Verbindungsfamilie angehören.

### Beschreibung der Figur

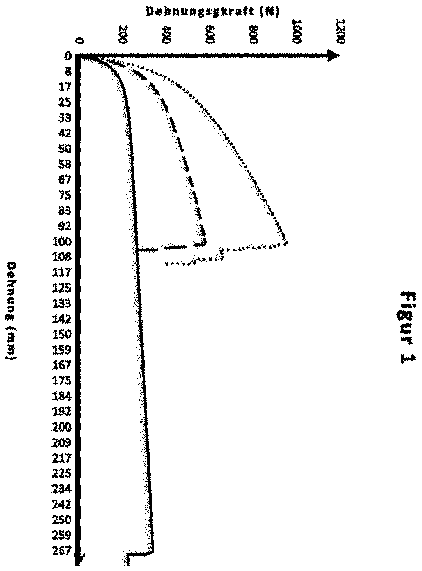

Figur 1 zeigt die Ergebnisse von Bruchdehnungstests von erfindungsgemäßen Verbundstrukturen (Beispiel 4: gestrichelte Linie; Beispiel 6: gepunktete Linie) und einer Verbundstruktur des Standes der Technik (C212: durchgezogene Linie).

### Ausführungsformen der Erfindung

Die erfindungsgemäße Verbundstruktur ist eine Verbundstruktur einer Shore-A-Härte nach DIN 53505 von 20 bis 45 mit einer Schaumschicht, einer Deckschicht und einer Lackschicht in dieser Reihenfolge, wobei die Schaumschicht eine Dichte von 40 bis 100 kg/m³ und einen Gelgehalt von 20 bis 80 % aufweist und ein Polyolefin enthält und die Deckschicht einen Gelgehalt von 0 bis 20 % aufweist, thermoplastisch ist und mindestens zwei kompakte Teilschichten mit jeweils mindestens einem unter Polyolefin und Polyvinylchlorid ausgewählten Thermoplasten enthält.

Bevorzugt ist eine Verbundstruktur, bei der die Deckschicht thermoplastisch ist und aus mindestens zwei polyolefinbasierten Teilschichten besteht, wobei zwischen der Schaumschicht und der Deckschicht kein Klebstoff enthalten ist.

In einer Ausführungsform ist der Gelgehalt der Deckschicht 3 bis 15 %, die Teilschichten der Deckschicht enthalten Polyolefin und die der Schaumschicht am nächsten liegende Teilschicht der Deckschicht weist eine Shore-A-Härte von 75 bis 95 und die daran anschließende Teilschicht eine geringere Shore-A-Härte auf.

In einer Ausführungsform weist die Verbundstruktur eine Deckschicht mit drei Teilschichten auf, wobei alle drei Teilschichten polyolefinbasiert oder PVC-basiert sind. Im Fall von thermoplastischem Polyolefin ist es besonders bevorzugt, dass die der Schaumschicht am nächsten liegende, also die innere Teilschicht der Deckschicht und die äußere Teilschicht gleiche Zusammensetzung haben und die mittlere Teilschicht eine andere Zusammensetzung aufweist.

Ganz besonders bevorzugt umfasst die erfindungsgemäße Verbundstruktur eine polypropylenbasierte, geschärfte Schaumschicht einer Dicke von 1,0 bis 5,0 mm, eine Deckschicht einer Dicke von 0,2 bis 1,0 mm und eine Lackschicht einer Dicke von 1 bis 30 µm in dieser Reihenfolge und ggf. eine Textilschicht einer Dicke von 0,05 bis 1,0 mm zwischen der Schaumschicht und der Deckschicht, wobei die Verbundstruktur gegebenenfalls eine Bruchdehnung von 80 bis 220 % besitzt.

Die erfindungsgemäße Verbundstruktur ist vorzugsweise als reißbarer Überzug für eine Airbagabdeckung geeignet. Der Ausdruck "als reißbarer Überzug für eine Airbag-Abdeckung geeignet" bedeutet, dass die erfindungsgemäße Verbundstruktur in einem Bereich der Airbagabdeckung angeordnet ist, wo sich die Sollbruchstelle der Abdeckung befindet. Beim Auslösen des Airbags, also beim Airbagschuss, bricht diese Sollbruchstelle und bewirkt ein Reißen der erfindungsgemäßen Verbundstruktur.

Damit die erfindungsgemäße Verbundstruktur die gewünschten Eigenschaften haben kann, z. B. eine leichte Verarbeitbarkeit beim Vernähen, darf die Verbundstruktur nicht zu hart sein. Die Shore-A-Härte der erfindungsgemäßen Verbundstruktur ist deshalb vorzugsweise 20 bis 45 und stärker bevorzugt 30 bis 45.

Die erfindungsgemäße Verbundstruktur weist vorzugsweise keine Materialschwächung auf. Der Ausdruck "Materialschwächung" kann jede physische Schwächung bedeuten und sich beispielsweise auf einen Bereich beziehen, in dem Material zur Bildung von Sollbruchlinien entfernt worden ist, oder eine Aufreißnaht oder Perforationslinie. Die erfindungsgemäße Verbundstruktur ist vorzugsweise "ohne Materialschwächung", die genannte Schwächung des Materials ist in der erfindungsgemäßen Verbundstruktur also nicht vorhanden.

Damit eine Beeinträchtigung der Airbagentfaltung oder das sogenannte Ballooning verhindert wird, ist es bevorzugt, dass alle Schichten der Verbundstruktur möglichst gleichzeitig reißen. Die Bruchdehnung (nach ISO 1421) der erfindungsgemäßen Verbundstruktur liegt vorzugsweise zwischen 60 und 250 %, stärker bevorzugt zwischen 80 und 220 % und noch stärker bevorzugt zwischen 100 und 200 %. Vorzugsweise liegen die Bruchdehnungen der anderen Schichten der Verbundstruktur im selben Bereich, wobei die Differenz der Bruchdehnung jeder Schicht zu der Bruchdehnung der Verbundstruktur weniger als 50 %, stärker bevorzugt weniger als 20 % und noch stärker bevorzugt weniger als 10 % ist.

Die Haftkraft zwischen den einzelnen Schichten ist gemäß ISO 2411 vorzugsweise so hoch, dass eine Trennung von zwei Schichten, also von Deckschicht und Schaumschicht und gegebenenfalls Deckschicht und Textilschicht sowie Textilschicht und Schaumschicht, ohne Zerstörung der Schichten nicht möglich ist. Insbesondere ist es bevorzugt, dass die Trennung der Schaumschicht von einer daran gebundenen Deckschicht oder Textilschicht ohne Zerstörung der Schaumschicht (Schaumspaltung) nicht möglich ist. Dieses Ziel kann erreicht werden durch die geeignete Auswahl der thermoplastischen Materialien der Deckschicht bzw. der an der Schaumschicht anliegenden Teilschicht der Deckschicht oder der Art des Klebstoffs, der die Schaumschicht mit der Textilschicht verbindet.

Für die Eignung zum Vernähen ist es wichtig, dass die erfindungsgemäße Verbundstruktur eine geeignete Stichausreißkraft aufweist. Diese ist vorzugsweise mindestens 40 N nach DIN EN ISO 23910. Nach einem erfindungsgemässen Verfahren wird eine Verbundstruktur hergestellt, worin die Teilschichten der Deckschicht thermoplastisches Polyolefin enthalten und zwischen der Schaumschicht und der Deckschicht keine Textilschicht angeordnet ist, wobei das Verfahren die folgenden Schritte umfasst: (i) das Koextrudieren der Teilschichten der Deckschicht und das thermische Laminieren an die Schaumschicht, (ii) das Lackieren der Deckschicht und, (iii) falls die Verbundstruktur eine Narbung aufweist, das Prägen zum Bilden der Narbung; oder (i) das Koextrudieren der Teilschichten der Deckschicht, (ii) das Lackieren der Deckschicht und, (iii) falls die Verbundstruktur eine Narbung aufweist, das Prägen zum Bilden der Narbung und das thermische Laminieren an die Schaumschicht.

Gemäss einem anderen erfindungsgemässen Verfahren zur Herstellung einer Verbundstruktur, worin die Teilschichten der Deckschicht thermoplastisches Polyolefin enthalten und zwischen der Schaumschicht und der Deckschicht eine Textilschicht angeordnet ist, umfasst das Verfahren folgende Schritte: (i) das Koextrudieren der Teilschichten der Deckschicht, (ii) das Lackieren der Deckschicht, (iii) das Schmelzkleben der Deckschicht und der Schaumschicht an die Textilschicht und, (iv) falls die Verbundstruktur eine Narbung aufweist, das Prägen der Struktur,wobei die Schritte in der angegebenen Reihenfolge oder in der Reihenfolge (i), (iii), (ii) und (iv) durchgeführt werden.

Gemäss einem anderen erfindungsgemässen Verfahren zur Herstellung einer Verbundstruktur, worin die Teilschichten der Deckschicht thermoplastisches Polyvinylchlorid enthalten und zwischen der Schaumschicht und der Deckschicht eine Textilschicht angeordnet ist, umfasst das Verfahren folgende Schritte: (i) das Bereitstellen der Textilschicht mit auflaminierten Teilschichten der Deckschicht (ii) das Lackieren der Deckschicht, (iii) falls die Verbundstruktur eine Narbung aufweist, das Prägen der Struktur, und (iv) das Schmelzkleben der Schaumschicht an die Textilschicht.

Gegenstand der Erfindung ist auch ein Nähprodukt, erhältlich durch Vernähen von mindestens zwei Lagen der erfindungsgemässen Verbundstruktur. Gemäss einer Ausführungsform ist das Produkt erhältlich indem die Verbundstruktur umgelegt wird, die Schaumstoffschichten aneinandergelegt werden und die beiden Teile der Verbundstruktur im Kontaktbereich vernäht werden. Gemäss einer Ausführungsform ist die Dicke der Schaumschicht im Bereich der Naht vor dem Vernähen verringert worden. Gegenstand der Erfindung ist auch die Verwendung einer erfindungsgemässen Verbundstruktur oder Nähprodukts als Überzugsmaterial für ein Bauteil im Fahrzeuginnenraum.

### Schaumschicht

Die Schaumstoffschicht enthält Polyolefinschaum oder besteht aus Polyolefinschaum. In diesem Schaum können die Polyolefine eingesetzt werden, die weiter unten in Bezug auf die thermoplastischen Polyolefine beschrieben werden. Die Schaumstoffschicht besteht aus oder enthält Polyproplylenschaum (PP-Schaum) in einer bevorzugten Ausführungsform. Unter Polypropylen (PP) werden hier solche Polymere oder Copolymere verstanden, deren Gewichtsanteil an Propylen > 50 Gew.-% beträgt.

In dem Polyolefin der Schaumschicht können übliche Additive, wie z.B. Gleitmittel, Stabilisatoren, Füllstoffe, wie anorganische Füllstoffe, und/oder Pigment enthalten sein.

Die weiter unten in Bezug auf die Deckschicht beschriebenen thermoplastischen Polyolefine (TPO) können auch für die Schaumschicht eingesetzt werden.

Das bevorzugt eingesetzte Polypropylen kann aus der Gruppe ausgewählt sein, die aus Polypropylen, Polypropylen-Ethylen-Copolymer, Metallocen-Polypropylen, Metallocen-Polypropylen-Ethylen-Copolymer, polypropylenbasiertem Polyolefinplastomer, polypropylenbasiertem Polyolefinelastoplastomer, polypropylenbasiertem Polyolefinelastomer, polypropylenbasiertem thermoplastischen Polyolefingemisch und polypropylenbasiertem thermoplastischen Elastomergemisch besteht.

Polypropylenbasiertes thermoplastisches Polyolefingemisch ist Homopolypropylen und/oder Polypropylen-Ethylen-Copolymer und/oder Metallocen-Homopolypropylen.

Die Dicke der Schaumschicht ist vorzugsweise 1,0 bis 5,0 mm, stärker bevorzugt 2,0 bis 5,0 mm und noch stärker bevorzugt 3,0 bis 4,5 mm.

Die Dichte der Schaumschicht ist 40 bis 100 kg/m³, vorzugsweise 40 bis 70 kg/m³.

Je höher die Dichte des Schaums ist, desto höher ist seine Festigkeit. Damit die Schaumschicht die für die Erfindung gewünschten Eigenschaften zeigen kann, korrelieren die bevorzugten Werte der Dichte und der Dicke der Schaumschicht. Insgesamt weist die Schaumstoffschicht jedoch eine sehr geringe Dichte auf. Dies spiegelt sich auch in dem Produkt der Dichte (in kg/m³) und der Dicke (in mm) der Schaumschicht wider. Dieses Produkt ist vorzugsweise 100 bis 300, stärker bevorzugt 150 bis 250.

Ein Maß für die Weichheit der Schaumschicht ist der Gelgehalt. Der Gelgehalt ist ein Hinweis auf den Vernetzungsgrad des Polymers. Je niedriger der Gelgehalt ist, desto weicher ist die Schaumschicht. Die in der erfindungsgemäßen Verbundstruktur eingesetzte Schaumschicht hat einen Gelgehalt von 20 bis 80 %, bevorzugt 30 bis 60 % und stärker bevorzugt 40 bis 60 %.

Die geschäumte Schicht wird vorzugsweise durch Schaumextrusion gebildet. Dabei wird die Schicht aus geschäumten Kunststoff dadurch erzeugt, dass die Kunststoffschmelze während des Extrusionsprozesses oberhalb der Schmelztemperatur mit einem unter Überdruck stehendem Treibmittel, insbesondere einem inerten Gas, durch Einblasen beladen wird und diese gasbeladene Schmelze anschließend bei Austritt aus der Extrusionsanlage entspannt und unterhalb der Schmelztemperatur abgekühlt wird. Die Schicht aus geschäumten Kunststoff wird also durch Einblasen von unter Überdruck stehendem Treibmittel in eine Kunststoffschmelze während des Extrusionsprozesses und durch anschließendes Entspannen des unter Überdruck stehenden Treibmittels erzeugt. Als Treibmittel können z. B. H₂O oder Inertgase, ggf. in Kombination miteinander, eingesetzt werden. Im Sinne einer ausgeprägten Schaumbildung wird vorteilhafterweise als Treibmittel ein inertes Gas eingesetzt oder ein Treibmittel eingesetzt, welches ein inertes Gas enthält. Als Inertgase können bei dem Verfahren alle dem Fachmann bekannten Inertgase eingesetzt werden, wobei sich im Hinblick auf Preis, Umweltverträglichkeit und Schäumverhalten CO₂ oder N₂ als besonders vorteilhaft erwiesen haben. Das Schaummaterial kann anschließend, z.B. thermisch oder durch Verkleben, mit der kompakten zweilagigen Deckschicht, in Form eines flächigen Materials verbunden werden, so dass eine mehrschichtige Kunststofffolie mit einer geschäumten Schicht entsteht. Es ist auch möglich, die Schaumschicht zuerst mit der inneren Schicht zu verbinden und anschließend die äußere Schicht auf die innere Schicht anzubringen.

Der in der Schaumschicht enthaltene Schaum kann offenzellig oder geschlossenzellig sein. Insbesondere bei der Herstellung von PP-Schaum als Bahnen kommt es dazu, dass die Zellstruktur an den Oberflächen sich von der restlichen, homogenen Struktur unterscheidet. Insbesondere weisen die Oberflächen härtere, geschlossenzellige Bereiche auf. Dies hat unterschiedliche physikalische Eigenschaften zur Folge, beispielsweise unterschiedliche Dehnung und Flexibilität, aber auch unterschiedliche Haptik. Durch das sogenannte Schärfen ("Skiving") der unteren und/oder oberen Oberflächenschicht der Bahn kann erreicht werden, dass eine Bahn erhalten wird, die den homogen zellstrukturierten Kernbereich des Schaums enthält. Durch dieses Verfahren wird ein sogenannter geschärfter Schaum erhalten. Das Schärfen kann sich auf einen oder mehrere Bereiche, z. B. die Randbereiche, der Bahn beschränken oder die gesamte Bahn umfassen. Die Schaumbahn wird so geschärft, dass beispielsweise mindestens 2 %, 5 %, 10 % oder 20 % der Dicke eines Bereichs oder der ganzen Bahn auf einer oder beiden Oberflächen entfernt wird, wobei bevorzugte Bereiche 2 bis 20 % oder 5 bis 15 % auf einer oder auf beiden Oberflächen sind. Die geschärfte Bahn weist dann eine Dicke von vorzugsweise 1 bis 5 mm auf. Dadurch wird die Haptik der späteren Schaumfolie deutlich weicher, und das Material lässt sich beim Herstellprozess der Nähkleider und beim Kaschieren besser handhaben. Der Schaum kann vor dem Ausbilden der Verbundstruktur geschärft werden, wobei eine oder beide Oberflächen geschärft werden können. Bevorzugt werden beiden Oberflächen vollflächig geschärft. Nach dem Verbinden des Schaums mit der Deckschicht oder mit der Textilschicht kann er an der noch freien Oberfläche geschärft werden.

Die Verwendung von geschärftem Schaum mit offenzelliger Oberfläche hat außerdem den Vorteil, dass in dem Verbindungsbereich mit einer anderen Schicht das Material dieser anderen Schicht oder das Klebemittel in die offenen Zellen eindringen kann und durch die auf diese Weise erhaltene Verankerung eine festere Verbindung erreicht werden kann.

Das Schärfen im Nahtbereich kann mit einer Schärfmaschine, z.B. FORTUNA NG6 (rotierendes Glockenmesser mit anpassbarer Messerdrehzahl), durchgeführt werden.

Dieses Verfahren hat ebenfalls sehr positiven Einfluss auf das Vermeiden von Knickfalten bei der Handhabung des Materials im Nähprozess. Der Schärfprozess im Nahtbereich ist auch notwendig, um die Nahtfahnen umlegen und absteppen zu können und ein damit verbundenes Verdicken des Materials zu verringern oder zu vermeiden. Beispielweise kann die Schaumschicht auf die Hälfte der Ausgangsdicke verringert werden. Im Nahtbereich von zwei Verbundstrukturen oder zwei Teilen einer Verbundstruktur ist die Verringerung der Schaumstoffdicke vorzugsweise dermaßen, dass die Dicke im Nahtbereich sich von der Dicke im angrenzenden, nicht dickenverringerten Bereich nicht unterscheidet oder höchstens 50 %, vorzugsweise höchstens 30 %, stärker bevorzugt höchstens 20 % und noch stärker bevorzugt höchstens 10 % größer ist.

Die Eigenschaften der Verbundstruktur sind so gewählt, dass ausreichend Nahtfestigkeit nach DIN ISO 23910 erzielt wird, ohne dass eine extra eingebrachte Nähhilfe, z.B. ein dünnes Textil, eingesetzt werden muss. Die Nahtfestigkeit wird unter anderem durch die Dicke und den Aufbau der Verbundstruktur bestimmt.

Die Schaumschicht weist beispielsweise eine Dicke von 3,5 mm auf. Die Deckschicht weist beispielsweise eine Dicke von 0,5 mm auf. Die Gesamtdicke ist also 4,0 mm. Wenn beim Umlegen der Nahtfahne einer Verbundstruktur die Gesamtdicke erhalten bleiben soll, müssen in diesem Bereich 4,0 mm entfernt werden. Dies kann erreicht werden, indem 2,0 mm der Schaumschicht entfernt werden, so dass die Schaumschicht nur noch eine Dicke von 1,5 mm hat. Wenn dieser Bereich umgelegt wird, verbleibt im Überlappungsbereich dann eine Gesamtdicke des Schaumstoffs von 3,0 mm, so dass die Eigenschaften der Verbundstruktur in diesem Bereich und die Eigenschaften der Verbundstruktur in anderen Bereichen zumindest ähnlich sind.

Es ist besonders bevorzugt, dass in einem erfindungsgemäßen Nähprodukt eine Schaumstoffschicht enthalten ist, die einem vollflächigen Schärfen mindestens einer Oberfläche, insbesondere beider Oberflächen, unterzogen worden ist. Noch stärker bevorzugt ist eine Schaumstoffschicht, die sowohl einem vollflächigen Schärfen beider Oberflächen als auch einem Schärfen im Nahtbereich unterzogen worden ist.

Beispiele von Polyolefinen und deren Herstellung sind in US 9260577B2 offenbart.

Diese Polyolefine umfassen 15 bis 75 Gewichtsteile eines Olefinblockcopolymers und 25 bis 85 Gewichtsteile eines propylenbasierten Polymers und weisen einen Vernetzungsgrad von 20 bis 75 % auf. Diese Polyolefine enthalten vorzugsweise geschlossene Zellen.

Beispielsweise kann der Vernetzungsgrad 30 bis 50 % sein, wobei die Vernetzungen mit 3 bis 4 Gewichtsteilen Divinylbenzolvernetzer pro 100 Gewichtsteile des Harzes erfolgen.

Diese Polyolefine, die beispielsweise gemäß US 9260577B2 hergestellt werden können, weisen folgende Eigenschaften auf:

| | Eigenschaften bevorzugter Polyolefine | Eigenschaften besonders bevorzugter Polyolefine | Eigenschaften ganz besonders bevorzugter Polyolefine |
|---|---|---|---|
| Kompressionsfestigkeit nach JIS K6767 [kg_{f}/cm²] | 0,2-1,0 | 0,3-0,6 | 0,75-0,85 |
| Dichte [kg/m³] nach JIS K6767 | 20-250 | 30-100 | 65-75 |
| Shore A nach ASTM D2240 | 30-90 | 45-65 | 70-75 |
| VDA 237-101 Abschnitt (Anhang) 1 | 1,0-3,2 | 1,0-2,8 | 2,3-2,5 |

Die in obiger Tabelle genannten Standards und deren Durchführung sind in US 9260577B2 erläutert.

### Deckschicht

Die Deckschicht ist thermoplastisch. Sie enthält ein thermoplastisches Polyolefin (TPO) und/oder ein thermoplastisches Polyvinylchlorid (PVC). Vorzugsweise besteht die Deckschicht aus einem TPO oder PVC. Der Ausdruck, dass eine Schicht TPO bzw. PVC "enthält", heißt, dass sie vorzugsweise zu mindestens 30 Gew.-%, stärker bevorzugt zu mindestens 50 Gew.-% und noch stärker bevorzugt zu 100 %, aus TPO bzw. PVC besteht. Der Ausdruck, dass eine Schicht auf TPO bzw. PVC "basiert", heißt, dass sie zu mindestens 50 Gew.-%, bevorzugt zu 100 %, aus TPO bzw. PVC besteht.

Die Deckschicht weist mindestens zwei Teilschichten auf. Bei Vorhandensein von zwei oder drei Teilschichten wird die der Schaumstoffschicht am nächsten liegende Teilschicht als die innere Teilschicht bezeichnet. Entsprechend wird die der Lackschicht am nächsten liegende Teilschicht als die äußere Schicht bezeichnet. Wenn drei Teilschichten vorhanden sind, wird die dazwischenliegende Teilschicht als mittlere Teilschicht bezeichnet.

Vorzugsweise umfasst die Deckschicht zwei oder drei Teilschichten.

Die Deckschicht besteht aus einem oder enthält einen Thermoplast, der unter TPO und/oder PVC ausgewählt ist. Der Thermoplast ist in mindestens einer der Teilschichten und vorzugsweise in allen Teilschichten enthalten. Wenn sowohl TPO als auch PVC enthalten sind, können diese in derselben Teilschicht oder in verschiedenen Teilschichten enthalten sein.

Die Anbindung zwischen der äußeren Schicht, der mittleren Schicht und inneren Schicht sowie zwischen der inneren Schicht und der Schaumschicht kann auf übliche Weise erfolgen, z.B. thermisch oder durch Verkleben.

Vorzugsweise ist die Shore-A-Härte der Deckschicht im Fall einer polyolefinbasierten Deckschicht höchstens 90, stärker bevorzugt höchstens 85, und im Fall einer PVC-basierten Deckschicht höchstens 60, stärker bevorzugt höchstens 50. Bevorzugt ist für eine polyolefinbasierte Deckschicht ein Bereich von 75 bis 95, stärker bevorzugt 75 bis 85. Für eine PCV-basierte Deckschicht ist ein Bereich von 30 bis 60 bevorzugt und 30 bis 50 stärker bevorzugt.

Bei zwei Teilschichten ist die Materialzusammensetzung des Schichtmaterials für die äußere Schicht und die des Schichtmaterials für die innere Schicht verschieden. Dies kann zum Beispiel durch Variation der Art und/oder Mengenanteile der eingesetzten Polymere und/oder Variation der Menge und oder Art der Additive, insbesondere Füllstoffe, erfolgen. Bei drei oder mehr Schichten ist die Materialzusammensetzung von benachbarten Schichten unterschiedlich. Daher können beispielsweise bei drei Schichten die innere und die äußere gleiche Zusammensetzung haben.

Die Dicke der Deckschicht ist vorzugsweise 0,2 bis 1 mm, stärker bevorzugt 0,2 bis 0,7 mm und noch stärker bevorzugt 0,3 bis 0,6 mm. Die Teilschichten können dieselbe oder unterschiedliche Dicke aufweisen. In einer Ausführungsform kann bei zwei Schichten die äußere Schicht dicker als die innere sein.

Bei zwei Teilschichten aus TPO weisen beide eine Dicke von vorzugsweise 100 bis 400 µm, stärker bevorzugt 100 bis 250 µm auf. Bei drei Teilschichten weisen alle vorzugsweise eine Dicke von 70 bis 250 µm, stärker bevorzugt 100 bis 200 µm auf.

Bei zwei Teilschichten aus PVC weisen beide eine Dicke von vorzugsweise 100 bis 500 µm auf. Bei drei Teilschichten weisen alle vorzugsweise eine Dicke von 100 bis 600 µm, stärker bevorzugt 150 bis 500 µm auf. Wenn die mit einer gegebenenfalls vorhandenen Textilschicht verbundene Teilschicht aus PVC als Klebstoffschicht dient, weist diese Schicht vorzugsweise eine Dicke von 20 bis 80 µm auf, und die beiden anderen Teilschichten aus PVC weisen vorzugsweise eine Dicke von 100 bis 600 µm, stärker bevorzugt 150 bis 500 µm auf.

Die Deckschicht ist kompakt. Insbesondere ist die Deckschicht nicht geschäumt. Die Dichte der Deckschicht ist vorzugsweise höher als 800 kg/m³ und stärker bevorzugt höher als 850 kg/m³. Dies gilt für jede Teilschicht unabhängig. Die erfindungsgemäße Struktur enthält mindestens zwei kompakte Teilschichten in der Deckschicht. Das heißt, dass jede der zwei Teilschichten eine Dichte von vorzugsweise höher als 800 kg/cm³ aufweist.

Wie für die Schaumschicht ist auch für die Deckschicht der Gelgehalt ein Maß für die Weichheit der Schicht. Die in der erfindungsgemäßen Verbundstruktur eingesetzte Deckschicht hat einen Gelgehalt von 0 bis 20 %, vorzugsweise von mehr als 0 % bis höchstens 20 %. In einer polyolefinbasierten Deckschicht ist der Gelgehalt vorzugsweise 3 bis 20 % oder 5 bis 20 %. In einer PVC-basierten Deckschicht ist der Gelgehalt vorzugsweise 1 bis 10 % oder 1 bis 5 %.

### TPO

Die Deckschicht, die in einer Ausführungsform in der erfindungsgemäßen Verbundstruktur eingesetzt wird, enthält thermoplastisches Polyolefin oder besteht aus diesem.

Thermoplastische Polyolefine (TPO) sind Polyolefine sind Polymere, die
aus Alkenen wie Ethylen, Propylen, 1-Buten oder Isobuten durch Kettenpolymerisation hergestellt werden. Es sind teilkristalline Thermoplaste, die sich leicht verarbeiten lassen.

Beispiele von TPO sind Polyethylen (PE), Polypropylen (PP), Polymethylpenten (PMP), Polyisobutylen (PIB) und Polybutylen (PB, Polybuten-1).

Unter Polyethylen (PE) werden hier solche Polymere oder Copolymere verstanden, deren Gewichtsanteil an Ethylen > 50 Gew.-% beträgt. Unter Polypropylen (PP) werden hier solche Polymere oder Copolymere verstanden, deren Gewichtsanteil an Propylen > 50 Gew.-% beträgt.

Beispiele von TPO sind Mischungen von Polyethylen (PE) und Polypropylen (PP).

Beispiele von PE sind HDPE, LDPE und LLDPE. HDPE weist schwach verzweigte Polymerketten auf und hat daher eine hohe Dichte zwischen 0,94 g/cm³ und 0,97 g/cm³, mit einer Spannung an der Streckgrenze von 20,0 bis 30,0 N/mm² sowie einer Dehnung von 12 % an der Streckgrenze. LDPE weist stark verzweigte Polymerketten und hat daher geringe Dichte zwischen 0,915 g/cm³ und 0,935 g/cm³, mit einer Spannung an der Streckgrenze von 8,0 bis 10,0 N/mm² und Dehnung von 20 % an der Streckgrenze. LLDPE ist ein lineares Polyethylen niederer Dichte, dessen Polymermoleküle nur kurze Verzweigungen aufweisen, und hat eine einer Spannung an der Streckgrenze von 10,0 bis 30,0 N/mm² sowie eine Dehnung von 16 % an der Streckgrenze.

Die Eigenschaften von TPO können durch das Zumischen von Elastomeren oder anderen Stoffen, wie Talkum, beeinflusst werden.

Je nach Zusammensetzung kann TPO hart oder weich hergestellt werden. Hartes TPO besteht z. B. zu 75 % aus PP und Talkum. Weiches TPO hat einen deutlich höheren Elastomeranteil, teilweise bis zu 70%.

Zur Einstellung der Eigenschaften können thermoplastische Elastomere zugesetzt werden. Diese sind ebenfalls thermoplastische Kunststoffe, die sich im Bereich üblicher Gebrauchstemperaturen gummielastisch verhalten, aber bei höherer Temperatur wie Thermoplaste verarbeitet werden können. Bei diesen unterscheidet man Copolymere und Elastomerlegierungen. Copolymere sind statistische Copolymere oder Blockcopolymere.Erstere bestehen aus einem Hauptpolymer wie z. B. Polyethylen, dessen Kristallisationsgrad durch ein zufällig entlang der Kette eingebautes Comonomer wie z. B. Vinylacetat soweit verringert ist. In Blockcopolymeren sind die Hart- und Weichsegmente in einem Molekül scharf getrennt (z. B. SBS, SIS). Copolymere können also aus einer weichen Elastomer- und einer harten thermoplastischen Komponente bestehen.

Elastomerlegierungen sind Zusammenmischungen von fertigen Polymeren. Durch unterschiedliche Mischungsverhältnisse und Zuschlagmittel erhält man gewünschte Eigenschaften. Beispielsweise deckt je nach Mengenverhältnis ein Polyolefin-Elastomer aus Polypropylen (PP)
und Naturgummi (NR) einen weiten Härtebereich ab.

Beispiele für TPO sind Verschnitte aus Ethylen-Propylen-Dien-Kautschuk (EPDM) mit Polyethylen (PE) und/oder Polypropylen (PP), Verschnitte aus Ethylen-Propylen-Kautschuk (EPM) mit Polypropylen (PP) und/oder Polyethylen (PE) und Ethylen-Propylen-Blends.

Die Ausführungen zu Polypropylen in diesem Abschnitt gelten nicht nur für die Deckschicht, sondern gleichermaßen für die PP-Schaumschicht.

### PVC

Die in einer Ausführungsform in der erfindungsgemäßen Verbundstruktur eingesetzte Deckschicht enthält oder besteht aus thermoplastischem Polyvinylchlorid (PVC). Die Eigenschaften von PVC werden durch den Zusatz von Weichmachern eingestellt. Der Zusatz von Weichmachern verleiht dem Polymer plastische Eigenschaften, wie Nachgiebigkeit und Weichheit. Als Weichmacher können Phthalsäureester, Chlorparaffine, Adipinsäureester, Phosphorsäureester Acetyltributylcitrat und 1,2-Cyclohexandicarbonsäurediisononylester. PVC kann bis zu 40 % Weichmacher enthalten.

PVC kann zur Verbesserung der physikalischen Eigenschaften, wie Zähigkeit und Elastizität, sowie zur Verbesserung der Verarbeitbarkeit mit Additiven versetzt werden. Beispiele solcher Additive sind Stabilisatoren und Schlagzäh-Modifiziermittel.

Beispielsweis kann PVC ohne Weichmacher eine Reißdehnung/Reißfestigkeit (nach DIN 53455) von 10 bis 50 % aufweisen, während PVC in Abhängigkeit von der Struktur und der Menge der Weichmacher eine Reißdehnung/Reißfestigkeit (nach DIN 53455) von 170 bis 400 % aufweisen kann.

Wenn die innere Deckschicht eine PVC-Schicht ist, kann diese gleichzeitig als Klebstoff zum Anhaften an die Schaumstoffschicht oder Textilschicht dienen.

### Oberflächenlack

Die Oberflächenlackierung dient dem Schutz des Kunstleders vor chemischen Mitteln, physikalischer Beschädigung, z.B. Kratzern oder Abrieb, und UV-Strahlung. Die Oberflächenlackierung kann weiterhin die Oberflächenhaftung des Kunstleders reduzieren. Es können herkömmliche Lacke verwendet werden, die sich für die Oberflächenveredelung von Kunstleder für den Interieurbereich von Fahrzeugen bewährt haben. Beispielsweise eignen sich lösungsmittel- oder wasserbasierte Polyurethane, die mit Isocyanaten quervernetzt oder mit Eigenschaften zur UV-Härtung versehen sind.

Die Oberflächenlackierung ist vorzugsweise über der Verbundstruktur durchgängig ausgebildet und bedeckt diese vollständig. Die Oberflächenlackierung ist aus mindestens einer Lackschicht gebildet, kann jedoch aus mehreren Lackschichten gebildet sein, vorzugsweise wird sie aus einer bis vier Lackschichten gebildet.

Die Oberflächenlackierung zum Schutz der Oberfläche besteht üblicherweise aus einer oder mehreren, vorzugsweise bis zu vier, durchsichtigen Lackschichten. In einer Ausgestaltung der Erfindung kann die Oberflächenlackierung jedoch auch gefärbt sein, z.B. durch Zugabe von Farbpigmenten in den Lack.

Das Ausbilden der Oberflächenlackierung erfolgt durch Aufbringen eines Lackes in einem oder vorzugsweise mehreren Aufträgen. Der Lackauftrag erfolgt vorzugsweise mittels Tiefdruck kann aber auch mit anderen Verfahren erfolgen, wie z.B. Walzenauftrag, Sprühauftrag oder in einem Prägeschritt zur Oberflächenprägung.

In einer Ausführungsform kann die Oberflächenlackierung in Form einer Lackschicht in einem zweistufigen Walzendruckverfahren aufgebracht werden. Die Oberflächenlackierung weist eine Dicke im Bereich von einigen Mikrometern auf, vorzugsweise 1 bis 30 µm, stärker bevorzugt 1 bis 20 µm und noch stärker bevorzugt 3 bis 10 µm.

Die Lackschicht ist vorzugsweise eine Polyurethan-Lackschicht. Ein Beispiel eines Oberflächenlackes ist ein Lack auf Basis eines silikonhaltigen aliphatischen Polyurethans. Dieser Lack kann in einer Dicke von beispielsweise 5 µm aufgetragen werden.

### Narbung

Die Verbundstruktur weist vorzugsweise eine Narbung auf. Die kompakte Deckschicht bzw. äußere Schicht der Deckschicht weist auf der Oberseite vorzugsweise eine dreidimensional strukturierte Oberfläche auf, nämlich eine so genannte Narbung, die in den verschiedensten Formen und Ausführungen möglich ist, die der Dekorierung dient. Die Narbung weist Höhen und Tiefen auf, wobei sich die Dicke der Deckschicht im Bereich der Höhen von der Dicke der Deckschicht im Bereich der Tiefen beispielsweise um mindestens 0,01 mm, um mindestens 0,05 mm, um mindestens 0,1 mm oder um mindestens 0,5 mm unterscheidet.

Die Narbung ist mit der Lackschicht überzogen. Die Narbung kann in der Lackschicht in Abhängigkeit vom Herstellungsverfahren gleichermaßen wie in der Deckschicht vorhanden sein. Wenn die Narbenbildung vor der Lackierung durchgeführt wird, werden die Narbentiefen durch das Lackieren in gewissem Maß gefüllt. Wenn die Narbenbildung nach dem Lackieren durchgeführt wird, ist die Narbung im Lack und der Deckschicht gleichermaßen ausgebildet.

Die Narbung kann mit herkömmlichen Verfahren hergestellt werden. Die Narbung kann als Papiernarbe erzeugt werden. Dafür wird das Ausgangsmaterial als PVC- oder PU-Masse auf ein strukturiertes Trägermaterial, z.B. ein Releasepaper, gestrichen. Im Anschluss daran wird das Trägerpapier entfernt und die Oberflächenlackierung mittels Tiefdruck in mehreren Arbeitsschritten aufgebracht. Alternativ wird die Narbung bzw. Prägung vorzugsweise mittels Prägewalze unter Aufbringung von Druck und Temperatur nach der Lackierung in die Kunstlederoberfläche eingebracht. Bedingt durch die Narbung weist die Verbundstruktur Bereiche mit größerer und geringerer Dicke auf.

### Textilschicht

Eine Textilschicht ist optional. Die Textilschicht enthält ein oder besteht aus einem Textilmaterial. Wenn die erfindungsgemäße Verbundstruktur eine Textilschicht enthält, ist diese zwischen der Schaumschicht und der Deckschicht angeordnet. Die Textilschicht kann mittels Klebstoff an die angrenzenden Schichten gebunden sein. Vorzugsweise ist die Textilschicht mit einem Klebstoff sowohl an die Schaumschicht als auch an die Deckschicht gebunden. Wenn die an die Textilschicht angrenzenden Teilschicht der Deckschicht eine PVC-Schicht ist, kann zwischen der Textilschicht und der Deckschicht auf einen Klebstoff verzichtet werden. In diesem Fall dient die PVC-Schicht als Klebstoff.

Das Textilmaterial kann beispielsweise ein Gewebe, ein Vlies oder eine Maschenware sein. Das Textilmaterial kann beispielsweise aus Naturmaterialien, wie z.B. aus Baumwolle, oder aus Chemiefasern aus natürlichen und synthetischen Rohstoffen, wie z.B. Polyamid, Polyester, oder Glasfasern, aber auch aus Mischformen beider Materialien ausgebildet sein, wobei ein Textilmaterial aus Polyester bevorzugt ist.

Vorteilhafterweise ist das Textilmaterial ein Maschengebilde, d. h. ein Gestrick oder Gewirk, so dass sich vollkonfektionierte Teile herstellen lassen. Das hat den Vorteil, dass mit der für Maschengebilde typischen Elastizität die vollkonfektionierten Teile eine optimale Passform aufweisen, so dass diese ohne weitere Bearbeitungsschritte verwendet werden können.

Um den Durchtritt des Airbags nicht zu beinträchtigen, wird vorzugsweise Textilmaterial mit geringerer Reißfestigkeit verarbeitet.

Die Dicke der Textilschicht ist vorzugsweise 0,05 bis 2,0 mm, stärker bevorzugt 0,1 bis 1,0 mm und noch stärker bevorzugt 0,2 bis 0,8 mm.

### Klebstoff

Der in der vorliegenden Erfindung eingesetzte Klebstoff ist bevorzugt ein im Stand der Technik bekannter und üblicher Schmelzklebstoff. Der Klebstoff wird beispielsweise in einer Dicke von 40 µm eingesetzt.

Ein bevorzugter Schmelzklebstoff basiert auf Polyurethan (PUR).

Die in der erfindungsgemäßen Verbundstruktur enthaltene Schaumschicht, Deckschicht und Lackschicht können Klebeeigenschaften aufweisen, so dass sie ohne Zusatz eines weiteren Klebstoffs fest aneinanderhaften können. Der in der vorliegenden Erfindung genannte Klebstoff bezieht sich daher auf ein Material, das sich von dem Material der jeweils beteiligten Schichten der erfindungsgemäßen Verbundstruktur unterscheidet.

Wenn in einer Verbundstruktur beispielsweise zwischen der Schaumschicht und der Deckschicht kein Klebstoff enthalten ist, bedeutet dies, dass kein Klebematerial enthalten ist, das sich in seiner Zusammensetzung vom Material der Schaumschicht oder Deckschicht unterscheidet.

Wenn in einer Verbundstruktur zwischen der Textilschicht und einer PVC-Teilschicht der Deckschicht kein Klebstoff enthalten ist, bedeutet dies, dass kein Klebematerial enthalten ist, das sich in seiner Zusammensetzung vom Material der Textilschicht oder der PVC-Teilschicht unterscheidet.

Eine bevorzugte Ausführungsform der erfindungsgemäßen Verbundstruktur umfasst eine Schaumschicht, eine Deckschicht und eine Lackschicht in dieser Reihenfolge, wobei zwischen diesen Strukturen kein Klebstoff vorhanden ist.

Eine weitere bevorzugte Ausführungsform der erfindungsgemäßen Verbundstruktur umfasst eine Schaumschicht, eine Klebstoffschicht, eine Textilschicht, eine Klebstoffschicht, eine Deckschicht und eine Lackschicht in dieser Reihenfolge. Wenn in dieser Ausführungsform die Deckschicht eine an die Schaumschicht angrenzende Teilschicht aus PVC enthält, kann diese als Klebstoffschicht dienen.

### Beispiele

Die vorliegende Erfindung wird anhand der nachfolgenden Beispiele weiter veranschaulicht.

### (a) Messmethoden

In der vorliegenden Erfindung wurden für die Bestimmung der Parameter der Verbundstruktur folgende Messmethoden verwendet:
(Die in der vorliegenden Anmeldung angegebenen Normen und Standards beziehen sich auf die zum Anmeldezeitpunkt aktuellen Versionen, wenn nichts anderes angegeben ist.)

### Deckschicht

Dicke: ISO 1923; Gewicht: ISO 2286-2:2016; Härte: DIN 53505; Schmelzpunkte (DSC): ASTM D 3418-15

### Textilschicht

Gewicht: EN 40-339-02; Weiterreißkraft: DIN 53356; Bruchdehnung: ISO 13934-1:99

### Schaumschicht

Dicke: ISO 1923; Dichte: ISO 845; Schmelzpunkt (DSC): ASTM D 3418-12

### Verbundstruktur

Härte (Shore A, ShA): DIN 53505

Faltenbildung: Es wurde ein Probenstück des Verbundmaterials einer Länge von 7 mm und einer Breite von 4,5 mm mit der Schaumseite nach außen gefaltet und in eine Vorrichtung, die bei einem Bruchbeständigkeitstest nach VDA 230-225 verwendet wird, eingelegt, dann wurde der Faltenbereich eine Minute mit einer Last von 1,4 kg beaufschlagt, das Probenstück entnommen, auf eine flache Oberfläche gelegt und dann dahingehend visuell beurteilt, ob das Probenstück in den Ursprungszustand zurückkehrte oder eine Falte verblieb.

Durchstichprüfung: ISO 3303-1; Bruchdehnung: ISO 1421; Weiterreißkraft: DIN 53356; Haftkraft Polymer/Schaum, Polymer/Textil und Textil/Schaum: ISO 2411

Gelgehalt: Die Messung des Gelgehalts basiert auf ASTM D2765-16. Das Verbundmaterial wird gewogen (Anfangsgewicht) und 24 Stunden bei 180 °C in Xylol eingelegt, danach wird das aufgelöste Material abgetrennt und das Gewicht des verbleibenden Materials bestimmt (Endgewicht); Gelgehalt [%] = [(Endgewicht-Anfangsgewicht)/Anfangsgewicht)] x 100 %

### (b) Durchführung der Beispiele

Es wurden Kunstleder der in Tabelle 1 angegebenen Zusammensetzung hergestellt.

Die in Tabelle 1 angegebene Anordnung der Teilschichten von oben nach unten entspricht der Anordnung von außen nach innen in der Verbundstruktur, das heißt in der Richtung von der Lackschicht zur Schaumschicht.

Die Struktur des Kunstleders und dessen Herstellung werden nachfolgend für die Verbundstrukturen der Beispiele 1, 4 und 6 näher erläutert.

### Beispiel 1

Das Kunstleder des Beispiels 1 hat folgende Struktur:
Schicht 0: Lack auf Basis von silikonhaltigem aliphatischen Polyurethan, ca. 5 µm dick
Schicht 1: kompakte TPO-Schicht (ca. 130 µm Schichtdicke)
Schicht 2: kompakte TPO-Schicht (ca. 130 µm Schichtdicke)
Schicht 3: kompakte TPO-Schicht (ca. 130 µm Schichtdicke)
Schicht 4: Polypropylenschaum (3500 bis 4000 µm Schichtdicke; geschärfter Schaum)

Die Schichten 1 bis 3 entsprechen den Schichten AA-B in Tabelle 1.

Die Verbundstruktur kann nach einem Verfahren mit folgenden Schritten hergestellt werden:
(i) Koextrudieren der TPO-Schichten und thermisches Laminieren an PP-Schaum
(ii) Lackieren der Oberseite und ggf. der Rückseite
(iii) Prägen zum Bilden der Narbung
(iv) ggf. Lackieren der Rückseite

Ein alternatives Verfahren umfasst folgende Schritte:
(i) Koextrudieren der TPO-Schichten
(ii) Lackieren der Oberseite
(iii) Prägen zum Bilden der Narbung und Laminieren an PP-Schaum
(iv) ggf. Lackieren der Rückseite

### Beispiel 4

Das Kunstleder des Beispiels 4 hat folgende Struktur:
Schicht 0: Lack auf Basis von silikonhaltigem aliphatischen Polyurethan, ca. 5 µm dick
Schicht 1: kompakte TPO-Schicht (ca. 130 µm Schichtdicke)
Schicht 2: kompakte TPO-Schicht (ca. 130 µm Schichtdicke)
Schicht 3: kompakte TPO-Schicht (ca. 130 µm Schichtdicke)
Zwischenschicht: Schmelzklebstoff, 40 µm dick
Schicht 4: 100 % Polyestertextil, 400 bis 600 µm dick
Zwischenschicht: Schmelzklebstoff, 40 µm dick
Schicht 5: Polypropylenschaum (3500 bis 4000 µm Schichtdicke, geschärfter Schaum)

Die Schichten 1 bis 3 entsprechen den Schichten A-B-A in Tabelle 1.

Die Verbundstruktur kann nach einem Verfahren mit folgenden Schritten hergestellt werden:
(i) Koextrudieren der TPO-Schichten
(ii) Lackieren der Oberseite
(iii) Schmelzkleben der TPO-Schichten und des Polypropylenschaums an das Polyestertextil
(iv) Prägen zum Bilden der Narbung
(v) ggf. Lackieren der Rückseite

Schritt (v) kann vor Schritt (iv) durchgeführt werden.

Ein alternatives Verfahren umfasst folgende Schritte:
(i) Koextrudieren der TPO-Schichten
(ii) Schmelzkleben der TPO-Schichten und des Polypropylenschaums an das Polyestertextil
(iii) Lackieren der Oberseite und ggf. der Rückseite

### Beispiel 6

Das Kunstleder des Beispiels 6 hat folgende Struktur:
Schicht 0: Lack auf Basis von silikonhaltigem aliphatischen Polyurethan, etwa 5 µm dick
Schicht 1: kompakte PVC-Schicht (ca. 220 µm Schichtdicke) (PVC1)
Schicht 2: PVC-Schaumschicht (ca. 430 µm Schichtdicke) (PVC2)
Schicht 3: kompakte Klebstoffschicht auf Basis von PVC (ca. 40 µm Schichtdicke) (PVC3)
Schicht 4: 100 % Polyestertextil, 400 bis 600 µm dick
Zwischenschicht: Schmelzklebstoff, 40 µm dick
Schicht 5: Polypropylenschaum (3500 bis 4000 µm Schichtdicke; geschärfter Schaum)

PVC3 dient als Klebstoffschicht.

Die Schichten 1 bis 3 entsprechen den Schichten PVC1 bis PVC3 in Tabelle 1.

Die Verbundstruktur kann nach einem Verfahren mit folgenden Schritten hergestellt werden:
(i) Überziehen der PVC-Schichten und Laminieren des Polyestertextils
(ii) Lackieren der Oberseite
(iii) Prägen zum Bilden der Narbung
(iv) Schmelzkleben des Polypropylenschaums an das Polyestertextil
(v) ggf. Lackieren der Rückseite

### (c) Ergebnisse

Es wurden die Eigenschaften dieser Kunstleder bezüglich Faltenbildung und Eignung als Airbagabdeckung untersucht.

Die Faltenbildung wurde unter folgenden Bedingungen ermittelt:
Versuch 1: Faltenbildung nach 1-minütigem Knicken bei Raumtemperatur bei einer Last von 1,4 kg.
Versuch 2: Faltenbildung nach jeweils 1-minütigem Knicken bei Raumtemperatur und 90°C bei einer Last von 1,4 kg.

Die Benotung der Faltenbildung erfolgte nach Knicken in Längs-, Quer- und Diagonalrichtung:
Note 1: keine oder kaum sichtbare Faltenbildung
Note 2: kaum sichtbare Faltenbildung
Note 3: deutlich sichtbare Faltenbildung

Die Reißeigenschaften bei Airbagschuss wurden bei -35°C, 23°C und 85°C untersucht.

In den Beispielen und Vergleichsbeispielen wurden Teilschichten aus thermoplastischem Polyolefin mit folgenden Shore-A-Härten (ShA) verwendet: XAKU: ShA 71; XZCI: ShA 86; XAKY: ShA 77; XAKJ: ShA 86; XZTE: ShA 68.

Als Textilschicht wurde Polyester (PES) und als Schaumschicht wurde Polypropylen (PP) eingesetzt.

Die Ergebnisse sind in Tabelle 1 gezeigt.

**Tabelle 1**

| | Vergleichsbeispiel 1 | Beispiel | | | Vergleichsbeispiel 2 | Beispiel | | |
|---|---|---|---|---|---|---|---|---|
| | | 1 | 2 | 3 | | 4 | 5 | 6 |
| Anordnung der Teilschichten der Deckschicht (Shore-A-Härte) | AA-XAKU (71) | AA-XAKU (71) | AA-XAKU (71) | AA-XAKY (77) | A-XAKJ (86) | A-XAKJ (86) | A-XAKJ (86) | PVC1 |
| | B-XZCI (86) | B-XZCI (86) | B-XAKY (77) | B-XAKY (77) | B-XZTE (68) | B-XZTE (68) | B-XZTE (68) | PVC2 |
| | | | | | A-XAKJ (86) | A-XAKJ (86) | A-XAKJ (86) | PVC3 |
| Gesamtdicke [mm] der Deckschicht | 0,40 | <0,40 | 0,40 | 0,40 | 0,50 | 0,50 | 0,50 | 0,70 |
| Textilschicht | - | - | - | - | PES | PES | - | PES |
| Dicke [mm] der Schaumschicht (PP, 50 kg/m³) | 4,0 | 3,5 | 3,5 | 3,5 | - | 3,5 | 3,5 | 3,5 |
| Benotung der Faltenbildung, Versuch 1 | 3 | 2 | 2 | 2 | 2 | 1 | 1 | 1 |
| Benotung der Faltenbildung, Versuch 2 | 3 | 1 | 2 | 1 | | | | |
| Reißeigenschaften bei Airbagschuss | Die Proben waren für den Einsatz in Airbags geeignet; die Produkte der Beispiele 2 und 3 rissen spät | | | | | | | |

Die Produkte der erfindungsgemäßen Beispiele 1 bis 6 erfüllten folgende Kriterien der Airbagbewertung: Partikelflug, Rissbild der Oberfläche, Aufblasverhalten des Airbags, Klappenbewegung, Aufreißzeit und Haftung des Dekors zum Träger.

Die Produkte der Vergleichsbeispiele erfüllten die Kriterien für die Airbagbewertung nur durch Materialschwächung.

### Weitere Versuche

Die Verbundstrukturen der Beispiele 1, 4 und 6 wurden weiteren Untersuchungen und Vergleichen mit den Verbundstrukturen C212 und PVC/Spacer des Standes der Technik unterworfen.

### C212

Das Kunstleder C212 weist eine durch Laserbehandlung eingeführte Materialschwächung auf und hat folgende Struktur:
Schicht 0: Lack auf Basis von silikonhaltigem aliphatischen Polyurethan, ca. 5 µm dick
Schicht 1: kompakte TPO-Schicht (ca. 190 µm Schichtdicke)
Schicht 2: kompakte TPO-Schicht (ca. 190 µm Schichtdicke)
Schicht 3: kompakte TPO-Schicht (ca. 190 µm Schichtdicke)
Schicht 4: Polypropylenschaum (2000 µm Schichtdicke; kein geschärfter Schaum)

Die Verbundstruktur C212 kann nach einem Verfahren mit folgenden Schritten hergestellt werden:
(i) Koextrudieren der TPO-Schichten und thermisches Laminieren an PP-Schaum
(ii) Lackieren der Oberseite und ggf. der Rückseite
(iii) Prägen zum Bilden der Narbung
(iv) ggf. Lackieren der Rückseite

Alternativ wird die Verbundstruktur C212 nach dem folgenden Verfahren hergestellt:
(i) Koextrudieren der TPO-Schichten
(ii) Lackieren der Oberseite
(iii) Prägen zum Bilden der Narbung und thermisches Laminieren an Polypropylenschaum
(iv) ggf. Lackieren der Rückseite

### PVC/Spacer

Das Kunstleder PVC/Spacer hat folgende Struktur:
Schicht 0: Lack auf Basis von silikonhaltigem aliphatischen Polyurethan, ca. 5 µm dick
Schicht 1: kompakte PVC-Schicht (ca. 230 µm Schichtdicke)
Schicht 2: kompakte PVC-Schicht (ca. 230 µm Schichtdicke)
Zwischenschicht: Schmelzklebstoff, 40 µm dick
Schicht 3: Abstandshaltertextil (Spacer) (3500 bis 4000 µm Schichtdicke)

### Ergebnisse

Die Ergebnisse sind in Tabelle 2 gezeigt.

**Tabelle 2**

| | | **C212** | **PVC/ Spacer** | **Beispiel 1** | **Beispiel 4** | **Beispiel 6** |
|---|---|---|---|---|---|---|
| | Eigenschaften | | | | | |
| | Aufbau (ShA) | AA-XAKJ | - | AA-XAKU | A-XAKJ (86) | PVC1 |
| | | (85) | | (71) | B-XZTE (68) | PVC2 |
| | | B- XZCI (86) | | B-XZCI (86) | A-XAKJ (86) | PVC3 |
| Deckschicht | Dicke (mm) | 0,57 | 0,57 | 0,4 | 0,4 | 0,7 |
| | Gewicht (g/m²) | 507 | - | 348 | 448 | 605 |
| | Härte (ShA) | 86 | | 81 | 81 | 43 |
| | Schmelzpunkt (°C) | Tf1=118 | | Tf1=118 | Tf1=117 | Gelierung |
| | | Tf2=162 | | Tf2=160 | Tf2=162 | >182°C |
| | Gelgehalt (%) | 24,5 | 1,84 | 15,6 | 5,6 | 1,55 |
| Klebstoff | Art | - | - | - | PUR-Schmelzklebstoff | - |
| | Menge (gm²) | | | | 40 | |
| Textilschicht | Art | - | Spacergewirke 3,50-4,00 mm dick | - | 100 % PES | |
| | Gewicht (g/m²) | | | | 52 | |
| | Zugfestigkeit Kette/Schuss (N) | | | | 161/146 | |
| | Weiterreißkraft Kette/Schuss (N) | | | | 17/20 | |
| | Bruchdehnung Kette/Schuss (%) | | | | 176/113 | |
| Klebstoff | Art | - | - | - | PUR-Schmelzklebstoff | |
| | Menge (g/m²) | | | | 40 | |
| Schaumschicht | Dicke (mm) | 2,0 | - | 3,5 | | |
| | Gewicht (g/m²) | 134 | | 175 | | |
| | Dichte (kg/m³) | 67 | | 50 | | |
| | Gelgehalt (%) | 65,3 | | 56,5 | | |
| | Schmelzpunkt (°C) | Tf1=121 | | Tf1=119 | | |
| | | Tf2=152 | | Tf2=145 | | |
| Verbundstruktur | Härte (ShA) | 48 | 34 | 30 | 44 | 34 |
| | Reißeigenschaften bei Airbagschuss | * | ** | * | * | * |
| | Haftung Polymer/- Schaum (N) | *** | - | *** | - | - |
| | Haftung Polymer/- Textil (N) | - | *** | - | *** | *** |
| | Haftung Textil/- Schaum | - | - | - | *** | *** |
| | Benotung der Faltenbildung, Versuch 2 | 3 | 1 | 2 | 1 | 1 |

| | | | | | | |
|---|---|---|---|---|---|---|
| ^{∗} Die Proben waren bei -35°C, 23°C und 85°C für den Einsatz als Airbagabdeckung geeignet. ^{∗∗} Kein Test möglich. ^{∗∗∗} Keine Trennung der Schichten ohne Zerstörung der Schichten, insbesondere der Schaumschicht (Schaumspaltung), möglich | | | | | | |

Figur 1 zeigt die hervorragenden Bruchdehnungseigenschaften der erfindungsgemäßen Verbundstrukturen der Beispiele 4 und 6.

## Patentansprüche

1. Verbundstruktur einer Shore-A-Härte nach DIN 53505 von 20 bis 45 als Überzug für eine Airbagabdeckung, wobei die Verbundstruktur eine Schaumschicht, eine Deckschicht und eine Lackschicht in dieser Reihenfolge enthält, die Schaumschicht eine Dichte nach ISO 845 von 40 bis 100 kg/m³ und einen Gelgehalt nach ASTM D2765-16 von 20 bis 80 % aufweist und ein Polyolefin enthält und die Deckschicht einen Gelgehalt nach ASTM D2765-16 von 0 bis 20 % aufweist, thermoplastisch ist und mindestens zwei kompakte Teilschichten mit jeweils mindestens einem unter Polyolefin und Polyvinylchlorid ausgewählten Thermoplasten enthält.

2. Verbundstruktur nach Anspruch 1, wobei der Gelgehalt der Deckschicht 3 bis 15 % ist, die Teilschichten der Deckschicht Polyolefin enthalten und die der Schaumschicht am nächsten liegende Teilschicht der Deckschicht eine Shore-A-Härte nach DIN 53505 von 75 bis 95 und die daran anschließende Teilschicht eine geringere Shore-A-Härte nach DIN 53505 aufweist.

3. Verbundstruktur nach Anspruch 1, wobei der Gelgehalt der Deckschicht 1 bis 5 % ist, die Teilschichten der Deckschicht Polyvinylchlorid enthalten und zusammen eine Shore-A-Härte nach DIN 53505 von 30 bis 60 aufweisen.

4. Verbundstruktur nach einem der vorstehenden Ansprüche, wobei das Polyolefin der Schaumschicht ein Polypropylen enthält oder aus Polypropylen besteht.

5. Verbundstruktur nach einem der vorsehenden Ansprüche, wobei die Schaumschicht aus geschärftem Schaum besteht.

6. Verfahren zur Herstellung einer Verbundstruktur nach einem der Ansprüche 1 bis 5, worin die Teilschichten der Deckschicht thermoplastisches Polyolefin enthalten und zwischen der Schaumschicht und der Deckschicht keine Textilschicht angeordnet ist, wobei das Verfahren die folgenden Schritte (i) bis (iii) in einer der angegebenen alternativen Reihenfolgen umfasst:
(i) das Koextrudieren der Teilschichten der Deckschicht und das thermische Laminieren an die Schaumschicht,
(ii) das Lackieren der Deckschicht und,
(iii) falls die Verbundstruktur eine Narbung aufweist, das Prägen zum Bilden der Narbung;
oder
(i) das Koextrudieren der Teilschichten der Deckschicht,
(ii) das Lackieren der Deckschicht und,
(iii) falls die Verbundstruktur eine Narbung aufweist, das Prägen zum Bilden der Narbung und das thermische Laminieren an die Schaumschicht.

7. Verfahren zur Herstellung einer Verbundstruktur nach einem der Ansprüche 1 bis 5, worin die Teilschichten der Deckschicht thermoplastisches Polyolefin enthalten und zwischen der Schaumschicht und der Deckschicht eine Textilschicht angeordnet ist, wobei das Verfahren folgende Schritte umfasst:
(i) das Koextrudieren der Teilschichten der Deckschicht,
(ii) das Lackieren der Deckschicht,
(iii) das Schmelzkleben der Deckschicht und der Schaumschicht an die Textilschicht und,
(iv) falls die Verbundstruktur eine Narbung aufweist, das Prägen der Struktur,
wobei die Schritte in der angegebenen Reihenfolge oder in der Reihenfolge (i), (iii), (ii) und (iv) durchgeführt werden.

8. Verfahren zur Herstellung einer Verbundstruktur nach einem der Ansprüche 1 bis 5, worin die Teilschichten der Deckschicht thermoplastisches Polyvinylchlorid enthalten und zwischen der Schaumschicht und der Deckschicht eine Textilschicht angeordnet ist, wobei das Verfahren folgende Schritte umfasst:
(i) das Bereitstellen der Textilschicht mit auflaminierten Teilschichten der Deckschicht
(ii) das Lackieren der Deckschicht,
(iii) falls die Verbundstruktur eine Narbung aufweist, das Prägen der Struktur, und
(iv) das Schmelzkleben der Schaumschicht an die Textilschicht.

9. Nähprodukt, erhältlich durch Vernähen von mindestens zwei Lagen der Verbundstruktur nach einem der Ansprüche 1 bis 5.

10. Nähprodukt nach Anspruch 9, wobei das Produkt erhältlich ist, indem die Verbundstruktur umgelegt wird, die Schaumstoffschichten aneinandergelegt werden und die beiden Teile der Verbundstruktur im Kontaktbereich vernäht werden.

11. Nähprodukt nach Anspruch 9 oder 10, wobei die Dicke der Schaumschicht im Bereich der Naht vor dem Vernähen verringert worden ist.

12. Verwendung einer Verbundstruktur nach einem der Ansprüche 1 bis 5 oder eines Nähprodukts nach einem der Ansprüche 9 bis 11 als Überzugsmaterial für eine Airbagabdeckung im Fahrzeuginnenraum.

## Claims

1. A composite structure having a Shore A hardness according to DIN 53505 of 20 to 45 as a coating for an airbag cover, wherein the composite structure contains a foam layer, a cover layer and a lacquer layer in this order, the foam layer has a density according to ISO 845 of 40 to 100 kg/m³ and a gel content according to ASTM D2765-16 of 20 to 80 % and comprises a polyolefin and the cover layer has a gel content according to ASTM D2765-16 of 0 to 20 %, is thermoplastic and comprises at least two compact sublayers each comprising at least one thermoplastic polymer selected from polyolefin and polyvinyl chloride.

2. The composite structure according to claim 1, wherein the gel content of the cover layer is 3 to 15 %, the sublayers of the cover layer contain polyolefin and the sublayer of the cover layer closest to the foam layer has a Shore A hardness according to DIN 53505 of 75 to 95 and the sublayer adjoining it has a lower Shore A hardness according to DIN 53505.

3. The composite structure according to claim 1, wherein the gel content of the cover layer is 1 to 5 %, the sublayers of the cover layer contain polyvinyl chloride and together have a Shore A hardness according to DIN 53505 of 30 to 60.

4. The composite structure according to any one of the preceding claims, wherein the polyolefin of the foam layer comprises a polypropylene or consists of polypropylene.

5. The composite structure according to any one of the preceding claims, wherein the foam layer consists of sharpened foam.

6. A method of manufacturing a composite structure according to any one of claims 1 to 5, wherein the sublayers of the cover layer comprise thermoplastic polyolefin and no textile layer is disposed between the foam layer and the cover layer, the method comprising the following steps (i) to (iii) in any one of the indicated alternative orders:
(i) co-extruding the sublayers of the cover layer and thermally laminating them to the foam layer,
(ii) lacquering the cover layer, and,
(iii) if the composite structure has a grain, embossing to form the grain;
or
(i) co-extruding the sublayers of the cover layer,
(ii) lacquering the cover layer, and,
(iii) if the composite structure has a grain, embossing to form the grain and thermally laminating to the foam layer.

7. The method of manufacturing a composite structure according to any one of claims 1 to 5, wherein the sublayers of the cover layer comprise thermoplastic polyolefin and a textile layer is disposed between the foam layer and the cover layer, the method comprising the steps of:
(i) co-extruding the sublayers of the cover layer,
(ii) lacquering the cover layer,
(iii) fusion bonding the cover layer and the foam layer to the textile layer, and,
(iv) if the composite structure has a grain, embossing the structure,
wherein the steps are performed in the order given or in the order (i), (iii), (ii) and (iv).

8. The method of manufacturing a composite structure according to any one of claims 1 to 5, wherein the sublayers of the cover layer comprise thermoplastic polyvinyl chloride and a textile layer is disposed between the foam layer and the cover layer, the method comprising the steps of:
(i) providing the textile layer with laminated sublayers of the cover layer,
(ii) lacquering the cover layer,
(iii) if the composite structure has a grain, embossing the structure; and
(iv) fusion bonding the foam layer to the textile layer.

9. A sewn product obtainable by sewing at least two sheets of the composite structure according to any one of claims 1 to 5.

10. The sewn product according to claim 9, wherein the product is obtainable by folding over the composite structure, placing the foam layers against each other and sewing the two parts of the composite structure in the contact area.

11. The sewn product according to claim 9 or 10, wherein the thickness of the foam layer in the area of the seam has been reduced before sewing.

12. The use of a composite structure according to any one of claims 1 to 5 or a sewn product according to any one of claims 9 to 11 as a coating for an airbag cover in the vehicle interior.

## Revendications

1. Structure composite d'une dureté Shore A selon la norme DIN 53505 de 20 à 45 pour servir de revêtement à un couvercle de coussin gonflable de sécurité, dans laquelle la structure composite contient une couche de mousse, une couche de protection et une couche de laquage dans cet ordre, la couche de mousse présentant une densité selon la norme ISO 845 de 40 à 100 kg/m³ et une teneur en gel selon la norme ASTM D2765-16 de 20 à 80 % et contenant une polyoléfine et la couche de protection présentant une teneur en gel selon la norme ASTM D2765-16 de 0 à 20 %, étant thermoplastique et contenant au moins deux sous-couches compactes avec respectivement au moins une matière thermoplastique choisie parmi la polyoléfine et le polychlorure de vinyle.

2. Structure composite selon la revendication 1, dans laquelle la teneur en gel de la couche de protection est de 3 à 15 %, les sous-couches de la couche de protection contiennent de la polyoléfine et la sous-couche située au plus près de la couche de mousse de la couche de protection présentant une dureté Shore A selon la norme DIN 53505 de 75 à 95 et la sous-couche adjacente présentant une dureté Shore A selon la norme DIN 53505 plus faible.

3. Structure composite selon la revendication 1, dans laquelle la teneur en gel de la couche de protection est de 1 à 5 %, les sous-couches de la couche de protection contiennent du polychlorure de vinyle et présentent conjointement une dureté Shore A selon la norme DIN 53505 de 30 à 60.

4. Structure composite selon une des revendications précédentes, dans laquelle la polyoléfine de la couche de mousse contient un polypropylène ou est composée de polypropylène.

5. Structure composite selon une des revendications précédentes, dans laquelle la couche de mousse est composée de mousse biseautée.

6. Procédé de fabrication d'une structure composite selon une des revendications 1 à 5, dans lequel les sous-couches de la couche de protection contiennent une polyoléfine thermoplastique et entre la couche de mousse et la couche de protection aucune couche textile n'est disposée, le procédé comprenant les étapes suivantes (i) à (iii) dans l'un des ordres alternatifs indiqués :
(i) coextrusion des sous-couches de la couche de protection et laminage thermique sur la couche de mousse,
(ii) laquage de la couche de protection et,
(iii) dans le cas où la structure composite présente un grain, gaufrage pour former le grain ;
ou
(i) coextrusion des sous-couches de la couche de protection,
(ii) laquage de la couche de protection et,
(iii) dans le cas où la structure composite présente un grain, gaufrage pour former le grain et laminage thermique sur la couche de mousse.

7. Procédé de fabrication d'une structure composite selon une des revendications 1 à 5, dans lequel les sous-couches de la couche de protection contiennent une polyoléfine thermoplastique et entre la couche de mousse et la couche de protection est disposée une couche textile, le procédé comprenant les étapes suivantes :
(i) coextrusion des sous-couches de la couche de protection,
(ii) laquage de la couche de protection,
(iii) collage par adhésif thermofusible de la couche de protection et de la couche de mousse sur la couche textile et,
(iv) dans le cas où la structure composite présente un grain, gaufrage de la structure,
dans lequel les étapes sont réalisées dans l'ordre indiqué ou dans l'ordre (i), (iii), (ii) et (iv).

8. Procédé de fabrication d'une structure composite selon une des revendications 1 à 5, dans lequel les sous-couches de la couche de protection contiennent un polychlorure de vinyle thermoplastique et entre la couche de mousse et la couche de protection est disposée une couche textile, le procédé comprenant les étapes suivantes :
(i) préparation de la couche textile avec des sous-couches laminées de la couche de protection
(ii) laquage de la couche de protection,
(iii) dans le cas où la structure composite présente un grain, gaufrage de la structure, et
(iv) collage par adhésif thermofusible de la couche de mousse sur la couche textile.

9. Article de couture, obtenu par couture d'au moins deux couches de la structure composite selon une des revendications 1 à 5.

10. Article de couture selon la revendication 9, dans lequel le produit est obtenu en pliant la structure composite, en juxtaposant les couches de mousse et en cousant les deux parties de la structure composite dans la zone de contact.

11. Article de couture selon la revendication 9 ou 10, dans lequel l'épaisseur de la couche de mousse au niveau de la couture est diminuée avant la couture.

12. Utilisation d'une structure composite selon une des revendications 1 à 5 ou d'un article de couture selon une des revendications 9 à 11 pour servir de matériau de revêtement à un couvercle de coussin gonflable de sécurité dans l'habitacle d'un véhicule.
